# EUROPEAN PATENT APPLICATION

(11) **EP 1 137 259 A2**
(43) Date of publication of application: **26.09.2001**
(21) Application number: 01300968.3
(22) Date of filing: 02.02.2001
(51) Int. Cl.: H04N 1/54

(54) **Image forming method used for colour printer**

(30) Priority: 10.02.2000 JP 2000033258
(71) Applicant: ALPS ELECTRIC CO., LTD., Ota-ku Tokyo 145 (JP)
(72) Inventor: Ogiyama, Osamu, Alps Electric Co., Ltd., Tokyo 145 (JP); Inoue, Yasutoshi, Alps Electric Co., Ltd., Tokyo 145 (JP)
(74) Representative: Kensett, John Hinton

(57) **Abstract**

An image forming method is provided, in which two gradation pattern images based on the color input information are recorded one on the other is characterized in that two colors, namely the primary color for recording one gradation pattern image and the secondary color for recording the other gradation pattern image, are selected from among a plurality of ink colors, at first the screen angle of the primary color is determined and the one gradation pattern image is recorded, and then the screen angle of the secondary color is determined based on the above-mentioned screen angle and the other gradation pattern image is recorded. By applying this method, it is possible to combine the primary color that is served as the main color and the secondary color that is served as the sub color selected from among a plurality of ink colors without restriction and also it is possible to record a high quality gradation image at any ink color combination.

## Description

### BACKGROUND OF THE INVENTION

### Field of the Invention

This invention relates to an image forming method used for a color printer that is capable of printing by use of a plurality of colors, and more particularly relates to an image forming method in which two color inks selected from among a plurality of color inks are used, and color gradation pattern images of the selected colors are laid one over the other to record a color image.

### Description of the Prior Art

Heretofore, an image forming method in which cyan, magenta, yellow, and black color dots are recorded on a recording paper in network arrangement fashion has been employed for thermal printers, inkjet printers, and electrophotographic printers.

Furthermore, in the image forming method described above, an aggregate composed of a predetermined number of ink dots that are arranged in the printing direction and in the direction perpendicular to the printing direction on a recording paper forms a unit pixel, and to prevent the unit pixels of different colors to cause optical interaction between the different colors and resultantly cause interference fringe such as moiré and rosette pattern, different screen angles are set for each color in recording of the unit pixel.

For example, in the case that a thermal printer, which is supportingly provided with a carriage that is reciprocative along a platen and provided with a thermal head having a plurality of heating elements arranged on the carriage, is used for recording as described above, at first a recording paper is fed between the platen and the thermal head.

The thermal head is pressed against the recording paper with interposition of an ink ribbon, and the heating elements are heated while the carriage is being moved together with the thermal head along the platen in the printing direction perpendicular to the arrangement direction of the thermal elements in the above-mentioned state to record the first unit pixel on the recording paper.

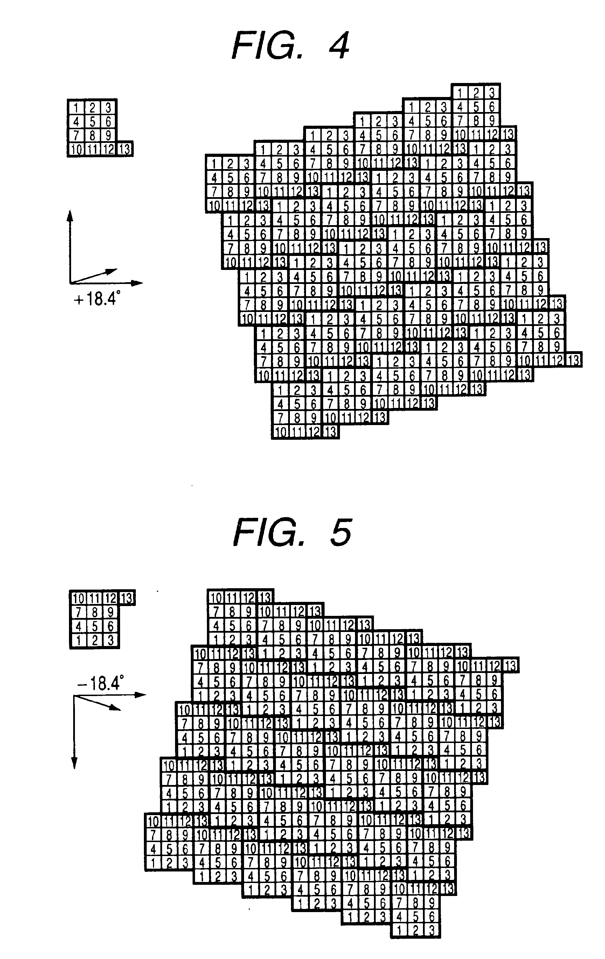

Next, the carriage is moved in the printing direction together with the thermal head and the heating elements of the thermal head for heating are displaced by a distance of several dots. Therefore, the second unit pixel is recorded at the position adjacent to the first unit pixel with a displacement of several dots in the direction perpendicular to the printing direction compared with the first unit pixel as shown in FIG. 5. At that time, the common tangential line of the first unit pixel and the second pixel makes a predetermined angle with respect to the printing direction, namely a screen angle as shown in FIG. 5.

The screen angle is differentiated between colors to disperse unit pixels of respective colors homogeneously on the recording paper for recording a color image, whereby, a good image with less interference fringe can be obtained.

However, in the field of recent color image forming technique, a color image is sometimes recorded by use of seven colors with additional three colors, namely red, green, and blue, in addition to conventional four colors, or furthermore white ink is sometimes added. In the situation that many inks of different colors are used for recording, the method in which the screen angle is previously differentiated between respective colors is limited.

The present invention has been accomplished in view of the above-mentioned problem, and it is the object of the present invention to provide an image forming method that is capable of combining the primary color that is served as the main color and the secondary color that is served as the sub color that are selected from a plurality of color inks without restriction, and capable of recording a high quality gradation image at any ink color combination.

To accomplish the above-mentioned object, an image forming method in accordance with the present invention is characterized in that two color inks, namely the primary color for recording the first gradation pattern image and the secondary color for recording the second gradation pattern image, are selected from among a plurality of color inks, the screen angle of the primary color is determined and the first gradation pattern image is recorded, and then the screen angle of the secondary color is determined based on the above-mentioned screen angle and the second gradation pattern image is recorded.

The screen angle of the primary color out of the primary color and the secondary color selected from the plurality of ink colors is determined at first, and the screen angle of the secondary color is determined based on the screen angle of the primary color. Thereby, the screen color is set without restriction, an gradation pattern image is recorded, and the high quality gradation image is recorded with various color combinations regardless of no previous determination of the screen angle for each ink color.

The image forming method in accordance with the present invention is further characterized in that the angular difference of the screen angle between the primary color and the secondary color is adjusted in the range from 20 degrees to 40 degrees.

Because the method as described above is employed, it is possible to record an image at the optimal screen angle for preventing the interference fringe effectively, and the quality of a gradation image is improved.

An embodiment of the present invention, will now be described, by way of example only, with reference to the accompanying drawings, in which:

FIG. 1 is a flow chart describing the image forming method in accordance with the present invention.

FIG. 2 is a diagram for showing the recording state of the screen angle of 45 degrees in the first example in the embodiment of the image forming method in accordance with the present invention.

FIG. 3 is a diagram for showing the recording state of the screen angle of 14 degrees in the first example in the embodiment of the image forming method in accordance with the present invention.

FIG. 4 is a diagram for showing the recording state of the screen angle of 18.4 degrees in the second example in the embodiment of the image forming method in accordance with the present invention.

FIG. 5 is a diagram for showing the recording state of the screen angle of -18.4 degrees in the second example in the embodiment of the image forming method in accordance with the present invention.

### Detailed Description of the preferred Embodiment

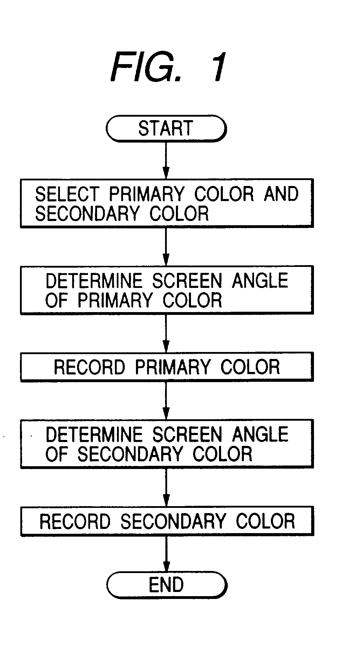

Embodiments of an image forming method in accordance with the present invention will be described in detail hereinafter with reference to FIG. 1 to FIG. 5.

In a color printer used in the present embodiment, as shown in a flow chart of FIG. 1, two colors, namely the primary color for recording the first gradation pattern image based on color input information and the secondary color for recording the second gradation pattern image based on color input information, are selected from among seven ink ribbons, namely green, blue, cyan, magenta, red, yellow, and black. The screen angle of the primary color is determined and the first gradation pattern image is recorded, and the screen angle of the secondary color is determined based on the above-mentioned screen angle and the second gradation pattern image is recorded on the first gradation pattern image. Thus, a desired color image is formed.

The recording order of the above-mentioned seven colors is restricted so as to be used in the order described above in the forming of a color image.

For example, in the case of the first embodiment in which two colors of green and blue are selected for color image recording, green that is preceding in the above-mentioned order is assigned as the primary color, and blue that is following in the above-mentioned order is assigned as the secondary color.

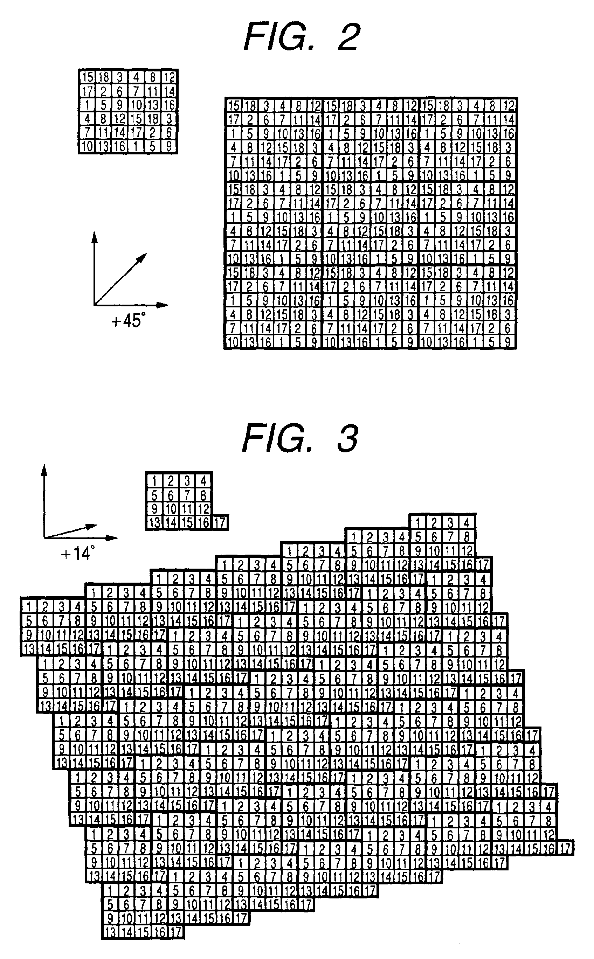

In the present embodiment, the screen angle of green that is served as the primary color is determined to be 45 degree, the first gradation pattern image is recorded on a desired recording paper based on the above-mentioned color input information with dither matrix of unit pixel as shown in FIG. 2.

The second gradation pattern image is recorded on the record of the above-mentioned first gradation pattern image doubly one on the other by use of blue ink that is served as the secondary color. In recording of the above-mentioned second gradation pattern image, the screen angle of the secondary color is adjusted so that the angular difference between the primary color and the secondary color ranges from 20 degrees to 40 degrees correspondingly to the screen angle of green that is served as the primary color. In the case of the present embodiment, the screen angle of the secondary color is determined to be 14 degrees so that the angular difference between the primary color and the secondary color is 31 degrees correspondingly to the screen angle of the primary color of 45 degrees, and a gradation pattern image is recorded with the dither matrix of unit pixel as shown in FIG. 3.

However, in the second example in which two colors of, for example, blue and red are selected as ink color, blue is assigned as the primary color and the following red is assigned as the secondary color differently from the first example.

In the case that the screen angle of the primary color is determined to be 45 degrees and the screen angle of the secondary color is determined to be 14 degrees as in the case of the first example, as for the blue ink color, it can be recordable with two screen angles of 14 degrees in the first example and 45 degrees in the second example.

One screen angle is set for each color in the prior art, but according to the present invention, different screen angles can be set depending on the ink color of the primary color or of the secondary color, or the screen angle itself of the primary color and the secondary color can be set arbitrarily. Therefore, the high quality gradation image can be obtained by use of various color combinations.

For example, as shown in FIG. 4 and FIG. 5, it is possible to set the screen angle of the primary color to be 18.4 degrees and the screen angle of the secondary color to be -18.4 degrees.

The above-mentioned unit pixel number shown in FIG. 2 to FIG. 5 shows the relative recording order for recording the group of an adjacent series of unit pixels positioned preceding and following in the printing direction, and does not show the recording order of the unit pixel in the whole recording. Therefore, for example, at the time after the first unit pixel is recorded and before the second unit pixel is recorded, a unit pixel that belongs to another unit pixel group may be recorded.

This image forming method may be applied to any one of the serial-type thermal printer, line thermal printer, inkjet printer, and electrophotographic printer.

As described above, according to the image forming method in accordance with the present invention, the screen angle of the primary color out of the primary color and the secondary color selected from the plurality of ink colors is determined at first, and the screen angle of the secondary color is determined based on the screen angle of the primary color. Thereby, the screen color is set without restriction, an gradation pattern image is recorded, and the high quality gradation image is recorded with various color combinations regardless of no previous determination of the screen angle for each ink color. Furthermore, the angular difference of the screen angle between the primary color and the secondary color is adjusted in the rage from 20 degrees to 40 degrees. Thereby, it is possible to record an image at the optimal screen angle for preventing the interference fringe, and the quality of a gradation image is further improved. As described above, the high quality image is recorded by use of desired two colors at a low cost.

## Claims

1. An image forming method used for a color printer in which two gradation pattern images based on different two color input information are laid one over the other to record a color image, wherein two colors, namely a primary color for recording a first gradation pattern image and a secondary color for recording a second gradation pattern image to be recorded on the primary color recorded-image, are selected from among a plurality of color inks, a first screen angle to be used for primary color recording is determined and the first gradation pattern image is recorded, and then a second screen angle to be used for recording secondary color recording is determined based on the first screen angle and the second gradation pattern image is recorded.

2. The image forming method used for a color printer according to claim 1, wherein angular difference between the first screen angle and the second screen angle is adjusted in a range from 20 degrees to 40 degrees.
